# EUROPEAN PATENT SPECIFICATION

(11) **EP 0 770 719 B1**
(45) Date of publication and mention of the grant of the patent: **24.05.2000**
(21) Application number: 95116176.9
(22) Date of filing: 13.10.1995
(51) Int. Cl.: D02J 13/00, H05B 6/14, F16C 39/06

(54) **High speed roll**
Hochgeschwindigkeitsrolle
Cylindre à grande vitesse

(43) Date of publication of application: 02.05.1997
(73) Proprietor: D.I.E.N.E.S. APPARATEBAU GMBH, D-63165 Mühlheim (DE); THE UNIVERSITY OF VIRGINIA PATENT FOUNDATION, Charlottesville, VA 22903 (US)
(72) Inventor: Allaire, Paul E., Charlottesville, Virginia 22901 (US); Brossmer, Max, 63454 Hanau (DE); Gehrmann, Wolfgang, 63454 Hanau (DE); Maslen, Eric H., Earlysville, Virginia 22936 (US)
(74) Representative: Rentzsch, Heinz, Dipl.-Ing.

(56) References cited:
- WO-A-92/01097
- WO-A-93/23683
- GB-A- 978 163
- GB-A- 2 083 729
- US-A- 3 200 230
- PATENT ABSTRACTS OF JAPAN vol. 017, no. 514 (E-1433), 16 September 1993 & JP-A-05 135868 (MITSUBISHI ELECTRIC CORP), 1 June 1993,
- PATENT ABSTRACTS OF JAPAN vol. 017, no. 514 (E-1433), 16 September 1993 & JP-A-05 135866 (MITSUBISHI ELECTRIC CORP), 1 June 1993,

## Description

The present invention relates to high speed rolls for yarn treating machines and in particular deals with bearings for such rolls. One type of such high speed rolls is used for spinning of partially drawn or fully drawn man made fiber. During the spinning process, the yarn spun by an extruder is wound around the shell of the roll. As shown in US patent 3 187 150 the shell may be heated by a stationary induction heater located inside said shell. The heated yarn is moved to a second heated roll of the same kind but running at a higher speed so that the yarn is stretched between the two rolls to achieve the desired molecular structure of the spun yarn. The circumferential speed of such rolls today goes up to 8000 m/sec. This high speed, together with the radial and tangential forces exerted by the drawn yarn onto the shell and its cantilever borne shaft, result in extreme working conditions for the shaft bearings, in particular for the bearing adjacent to the roll. These bearing conditions become even worse due to the high operating temperature caused by heating the shell of the roll. Such roll and shaft assemblies sometimes tend to oscillate causing additional forces which act upon the bearings. In order to prevent any resonant oscillations in the shaft, its size must be made thick enough to ensure that the entire aggregate, consisting of the roll and its driving motor, runs undercritically over the total operating speed range.

Todays roller bearings used for these purposes must be selected very carefully with extremely small mechanical tolerances. Nevertheless, they run at their speed limits and must be oil mist lubricated. Very careful maintainance and service is required by well trained personnel. Such ball bearings are subject to wear and must be exchanged after a limited operating period in order to prevent unplanned stoppage in yarn production. Such preventative service constitutes a considerable cost factor, especially when taking into account the production down time during maintanance and/or exchange of the bearings. The use of oil mist or other lubricating methodes requires great care and monitoring of the oiling system leakage, its adjustment and supervision, since any escaping oil or oil mist may impair the quality of the yarn under treatment.

It therefor is a primary object of the invention to provide an improved high speed roll for yarn treatment, to facilitate the maintainance of such rolls, and to reduce the operating costs of yarn treating machines comprising heated rolls running at extremely high speeds.

These and other objects are achieved by the invention as described below and characterized in the claims. According to one aspect of the invention, a high speed roll for yarn treatment is driven by an electric motor and consists of a cylindrical shell fixed at one of its ends by means of a hub to a driving shaft which is driven by said motor. The shaft extends through said shell and is supported by two bearings spaced apart along the shaft. The stationary parts of the bearings are supported by the machine frame of the yarn treating machine, e.g. a spinning machine. According to the invention, at least one of the bearings, and in particular the bearing located adjacent to the shell, is an electro-magnetic bearing and has at least two energizing coils generating two magnetic fields extending rectangularily with respect to each other and with respect to the axis of the shaft. A four-quadrant shaft position sensing means is provided aside the magnetic bearing for sensing the actual position of the shaft between the pole pieces of the magnets. Output signals of the position sensor(s) are fed to the input of an electronic feedback position controller, whose output signals are amplified and thereafter control the energizing D.C. current flowing through the coil(s) of the electro-magnetic bearing. If only one of the two shaft bearings is an electro-magnetic bearing, the other one that is remote from the shell will be a conventional roller bearing. In the case of a heated roll, an inductor may be located stationarily inside the shell with the shaft extending through said inductor.

In case the electromagnetic bearing(s) should fail, a back-up roller bearing must be provided close to the electromagnetic bearing. This back-up bearing prevents damaging the magnetic bearing in case of a power loss or a failure of the power amplifier delivering the energizing current for the electromagnetic bearing. The back-up bearing has a clearance from the shaft or roll, respectively, and is not engaged during normal operation of the magnetic bearing. If both bearings are magnetic bearings, it is useful to provide a magnetic thrust bearing for absorbing axial forces of the shaft or roll, respectively. In all cases, the main advantage of using a magnetic bearing is not only the fact that magnetic bearings are not subject to mechanical wear, but in addition, the transfer of heat across the bearing is essentially reduced because there is no heat conducting mechanical connection between the stationary and the rotating parts of the bearing.

Although most of the possible modes of displacements of the roll can be compensated by properly controlling the current flowing through the energizing coils of the electromagnets, there are still a few possible displacements which cannot be corrected this way; this in particular if only the roll is displaced but the shaft maintains its regular position. This may happen, if the shell swings around the node where the hub is fixed to the end of the shaft. The invention provides means for suppressing or at least essentially damping such unwanted oscillations of the shell. These means preferably consist of a ring of electrically conducting material, such as Al or Cu, fixed to the rotating shell and projecting into an inhomogeneous portion of a stationary magnetic field. If the ring in the course of those vibrations changes its position within said field such that a different number of magnetic force lines are cut compared to the situation before said change, eddy currents will be induced in said ring, which will effectively dampen such radial oscillations of the shell.

For amplifying the control signals of the electronic feedback controller, preferably a chopper power amplifier is used. The gain factors of the controller as well as the 'spring rate' of the magnetic bearing are selected and adjusted to the controller such that the entire aggregate is running over the entire range of operating speed and load without any resonance and with properly damping any conditions of resonance.

The invention and its details and advantages will now be described with reference to preferred embodiments as shown in the accompanying drawings. Therein:
- Fig. 1: shows an induction heated roll driven by an electromotor with two electromagnetic bearings supporting the motor shaft at both sides of the motor stator.
- Fig.2: shows a similar heated roll with the bearing close to the roll being a magnetic bearing and the remote bearing being a conventional roller bearing. A back-up roller bearing is associated with the magnetic bearing.
- Fig.3: shows a sectional view of the magnetic bearing along section line III-III in Fig. 1 and 2 together with the position sensors, the current controller, and the amplifier for the energizing coils of the magnetic bearing.
- Fig.4: represents a schematic drawing of a mode of oscillation of the roller shell around the node of the hub by which it is fixed to the drive shaft.
- Fig. 5: shows an enlarged view of the means for damping oscillation modes of the roll as shown in the computer simulated representation of Fig.4.
- Fig.6: shows a further embodiment of an induction heated roll, wherein a magnetic bearing is provided at each end of the induction heater inside the roll.
- Fig.7: shows a similar induction heated roll, wherein the induction heater and the motor stator are fixed to a stationary shaft or tube and the rotor surrounds said stator.
- Fig.8: shows a motor driven induction heated roll having its shaft supported by a magnetic bearing and a roller bearing and comprising a disengageable back-up bearing.
- Fig.9: is an enlarged representation of the back-up bearing for the shaft in Fig.8.

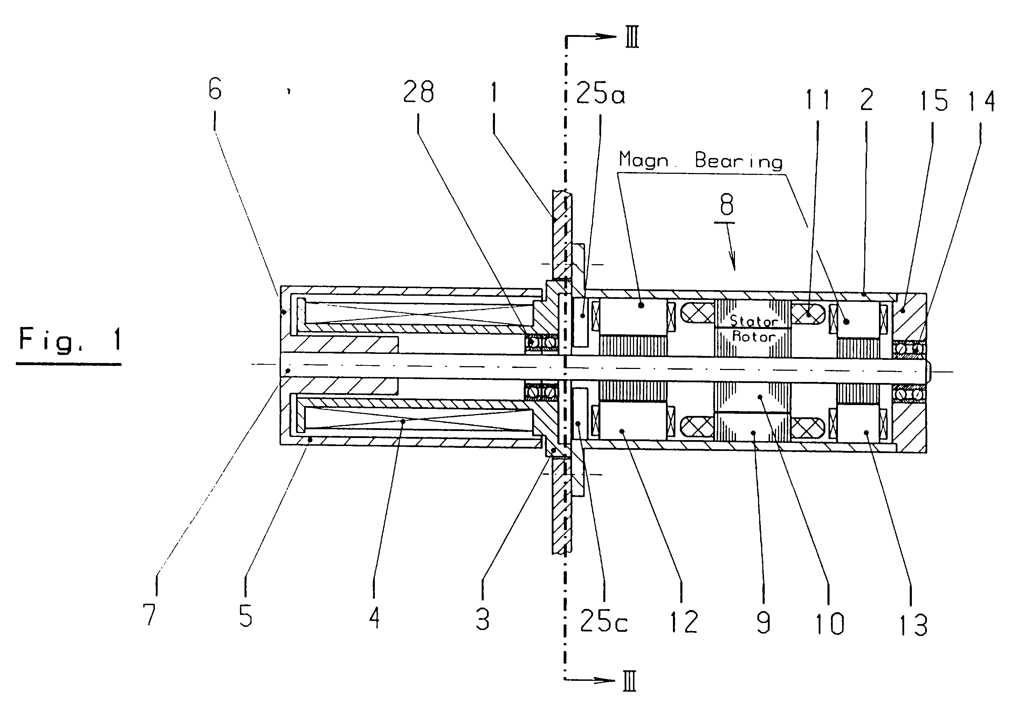

In Fig.1, the frame 1 of a yarn spinning machine holds at its one side a housing 2 of an electromotor and on its other side a laminated magnetic core 3 of an induction heater. A coil 4 is wound around said core which together with a cylindrical shell 5 of the roll constitutes a magnetic circuit for heating said shell. A copper layer (not shown) may be provided on the internal surface of shell 5 for increasing the heating effect by eddy current heating of said copper layer. Shell 5 is fixed by means of a hub 6 to driving shaft 7 which is driven by electric motor 8 comprising rotor 10 and stator 9 both being assembled of laminated steel sheets. Stator 9 carries energizing coils 11 and is supported by motor housing 2. Also supported by housing 2 are two electromagnetic bearings 12 and 13, one at each side of stator 10. Since the shown magnetic bearings generate bearing forces only in the radial direction, an additional thrust bearing, in the form of a conventional roller bearing 14 is provided at the end of shaft 7 remote from shell 5 and absorbs axial forces acting upon shaft 7. The stationary cage of thrust bearing 14 is held by the rear flange 15 of motor housing 2. Various types of magnetic bearings are known , e.g. from U.S. patent 4 037 886.

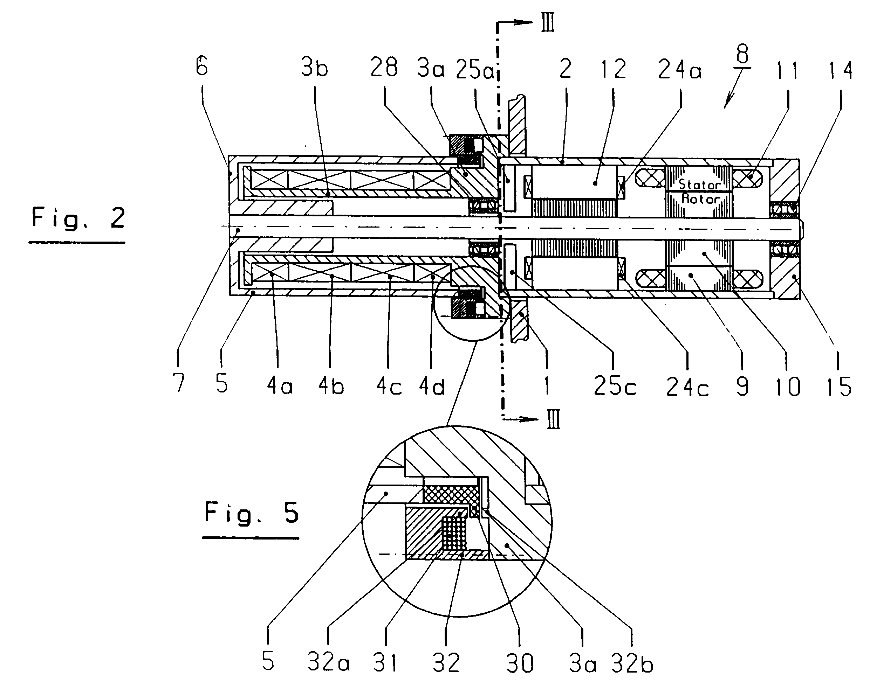

A preferred second embodiment of the invention is shown in Fig.2. Parts identical in shape or function with parts of Fig. 1 are labelled with the same reference numerals and will not be described again. In this configuration, only bearing 12, which is located adjacent roll 5,6 and heater 3,4, is a magnetic bearing whereas the bearing remote from roll 5,6 is a roller bearing(s) 14 which simultaneously act(s) as a thrust bearing for absorbing axial forces acting upon shaft 7. The inductor coil 4 is subdivided into partial coils 4a to 4d, which are energized separately in order to improve the temperature profile along shell 5. As in Fig. 1 a thread or yarn (not shown) is wound at least once, but mostly several times around the shell 5 and is heated to a desired yarn treating temperature. The magnetic core 3 of the induction heater here is formed by a supporting end portion 3a, a cylindrical core member 3b, and hub 6.

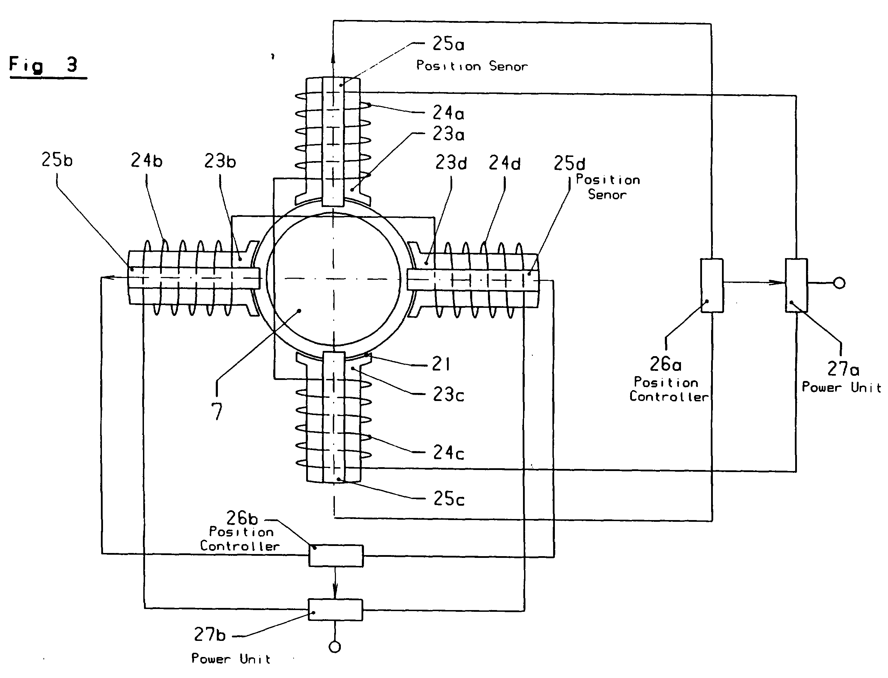

Fig.3 shows schematically a sectional view of the magnetic bearing 12 along the section line III-III of Fig. 1 or 2. A four-quadrant or other multiple circumferential division arrangement of four or more magnetic pole pieces 23a to 23d carries a plurality of energizing coils 24a to 24d. The front surfaces 21 of pole pieces 23a to 23d face the circumferential surface of shaft 7. Several magnetic position sensors 25a to 25d (only two of them, namely 25a and 25c are seen in Fig.2) sense the radial position of shaft 7 in the neighbourhood of magnetic bearing 12. These position sensors may be eddy current, inductive, optical, capacitive, Hall-effect or other proximity sensors. The difference between the output signals of vertical position sensors 25a and 25c is fed to the signal inputs of a first controller 26a, preferably an electronic feedback controller, which may have proportional, integral and derivate terms of its control function (sometimes called a PID controller). In this controller said differential signal is compared with a setpoint signal. The output signal of the controller is amplified by means of a first chopper amplifier 27a which provides the energizing current for vertical bearing coils 24a and 24c of magnetic bearing 12. In the same manner, the output signals of horizontal position sensors 25b and 25d control the energizing current for horizontal bearing coils 24b and 24d via a second electronic feedback controller 26b and a second amplifier 27b.

During start-up of roll rotation and in the case of a failure of power amplifier 27 or even a general power failure, an auxiliary roller bearing 28, called a back-up bearing, is used for ensuring safe operation of the roll. An air gap of about 0,2 mm is provided between the internal cage of this back-up bearing and the shaft 7, so that during normal operation of the magnetic bearing there is no engagement between this back-up bearing 28 and shaft 7.

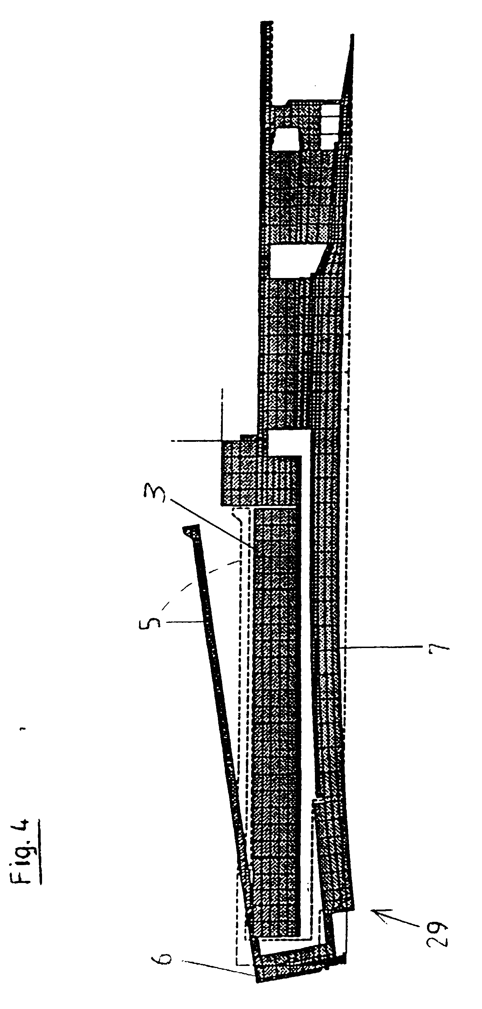

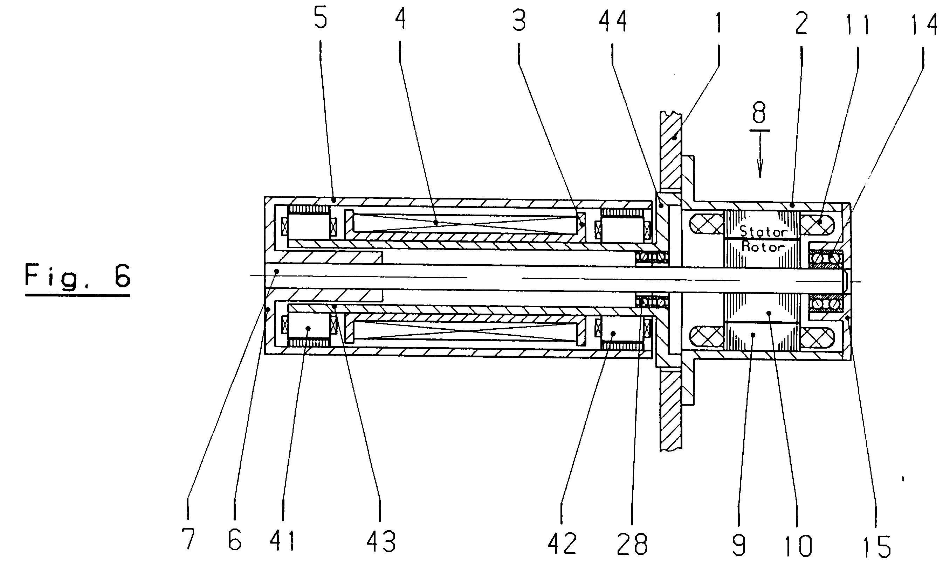

Another feature of the invention will now be explained with reference to Figures 2, 4 and 5. The position sensors 25 of Figures 2 and 3 can only sense displacements of shaft 7. If, however, shell 5 is displaced without a significant displacement of shaft 7, those sensors 25 and the associated shaft position control means will not be effective. Fig.4 shows how shell 7 could turn or oscillate around node region 29 where hub 6 is fixed to the left end of shaft 7. In order to prevent such displacements or oscillations of shell 5, the embodiment of Fig.2 comprises a ring 30, composed of copper, aluminum or other conducting material, fixed to the shell 5 as shown in Fig.5. Ring 30 projects into a stationary, inhomogeneous, ring-shaped magnetic field generated by ring coil 31. This ring-shaped coil 31 is carried by a cover ring 32 held by a core member 3a. Fig.5 shows an enlarged view onto this coil 31 and ring 30. Cover ring 32 has a U-shaped cross section, so that a radial inhomogeneous magnetic field extends between a circular pole member 32a and an associated circular pole member 32b mounted on portion 3a of core 3. Ring 32 is made of a magnetic material and therefore together with the core portion 3a constitutes a ring-shaped magnetic circuit for the damping means.. As long as there is no radial movement of ring 30 within this magnetic field, there will be no influence of this equipment onto shell 5. If, however, shell 5 is radially displaced or even oscillating as shown in Fig.4, then conducting ring 30 will move into portions of different magnetic field density, so that eddy currents will be induced in the conducting ring 30, which together with the magnetic field of ring coil 31 generate damping forces acting against such displacement. Therewith, this damping means automatically prevents the shell from beeing displaced or oscillating in the kind as shown in Fig.4.

A further embodiment of an induction heated roll according to the invention is shown in Fig.6. Again, identical reference numerals designate elements corresponding to elements of the previous figures. In this case two magnetic bearings 41 and 42 are positioned at either end of the induction heater 3,4. Current control means for magnetic bearings 41 and 42 are provided as in Figures 2 and 3 but are not shown and described again. The stationary pole pieces of magnetic bearings 41 and 42 are supported by a tube 43 which is part of inductor carrier 44. This carrier is fixed to machine frame 1 and carries inductor core 3. In this case the pole pieces of bearings 41 and 42 lie inside shell 5 which is magnetically supported by those bearings.

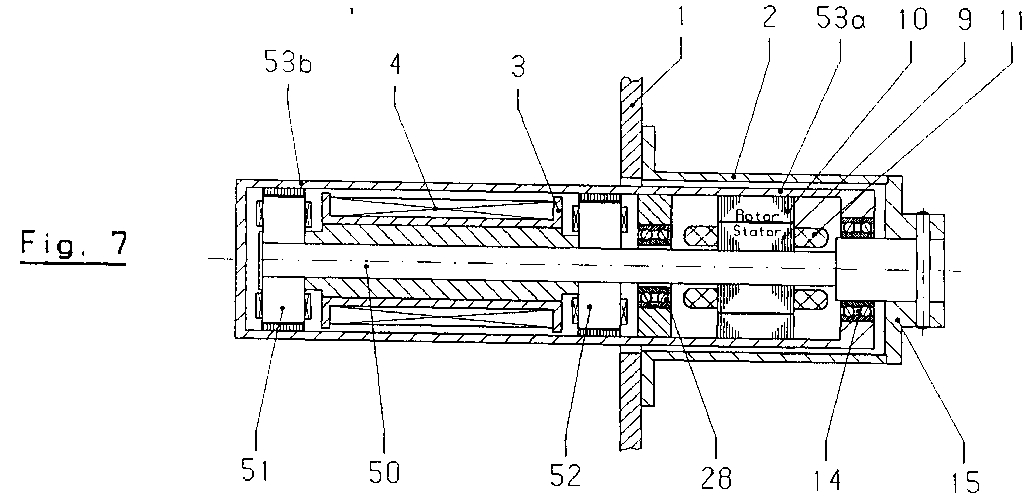

Fig.7 represents still another example of the invention. A housing 2 is fixed to machine frame 1, and an end plate 15 of this housing holds a fixed cylindrical support shaft or tube 50. This stationary shaft or tube 50 carries stator 9 of motor 8, which stator 9 in this case is surrounded by rotor 10. Shaft 50 furthermore carries the stationary pole pieces and coils of magnetic bearings 51 and 52 as well as inductor core 3 with its energizing coil 4, which could be divided into several coil portions as mentioned above with reference to Fig.2. Shaft or tube 50 is fixed to machine frame 1 via end plate 15 and motor housing 2, and therefore does not rotate but is stationary. Shell 53a, 53b at its right portion 53a carries at its internal surface the rotor 10 of motor 8. The left portion 53b of said shell is heated by induction heater 3, 4 and serves for yarn treatment.

In case of a failure of the magnetic bearing, a back-up bearing must prevent damage of the parts of the magnetic bearing as well as of the motor. Such back-up bearing normally is a radial bearing whose inner race is separated from the shaft by an air gap, which is smaller than the air gap of the magnetic bearing and the air gap between the stator and the rotor of the motor, during normal operation. In case of an unbalance of the rotating mass, however, displacements of the rotating body may occur if the centrifugal forces of the rotating body are bigger than its weight. These displacements could be approximately twice the size of the air gap between the inner race of the back-up bearing and the shaft. For avoiding this problem, the invention provides that during normal operation of the roll the inner race of the back-up bearing is separated from the shaft by an air gap but in case of a magnetic bearing or other failure, this air gap is removed and the inner race of the back-up bearing fits tightly on the shaft. The back-up bearing which normally is disengaged, in case of a failure, is promptly coupled with the shaft.

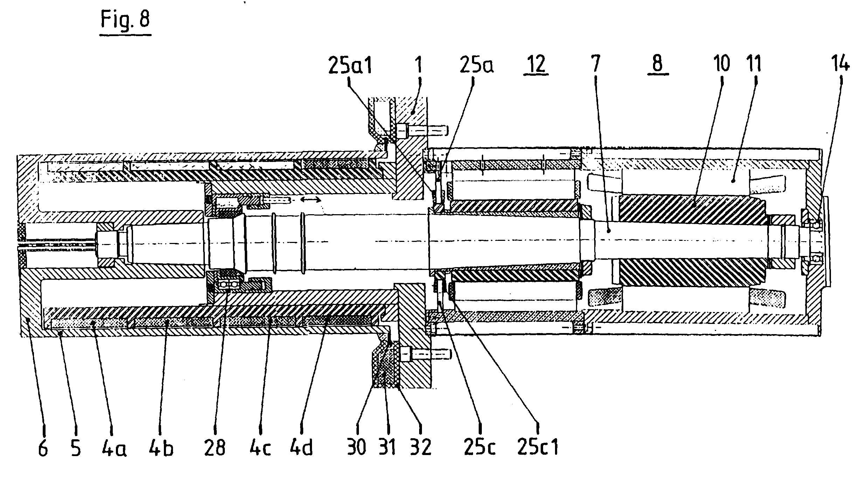

Fig.8 shows an induction heated roll similar to Fig.2 including a motor 8, a magnetic bearing 12, a thrust bearing 14, a shaft 7, and shaft position sensors 25a, 25c with sensor coils 25a1 and 25c1 for sensing vertical displacements of shaft 7. Corresponding sensors 25b,25d and associated sensor coils for horizontal displacement sensing are not shown in Fig.8. These sensor coils are connected to the inputs of coresponding electronic feedback controllers 26a and 26b, respectively, as this was described earlier in relation to Fig.3. The apparatus further includes a stationary magnetic inductor core 3 provided with energizing coils 4a to 4d for inductively heating roller shell 5.

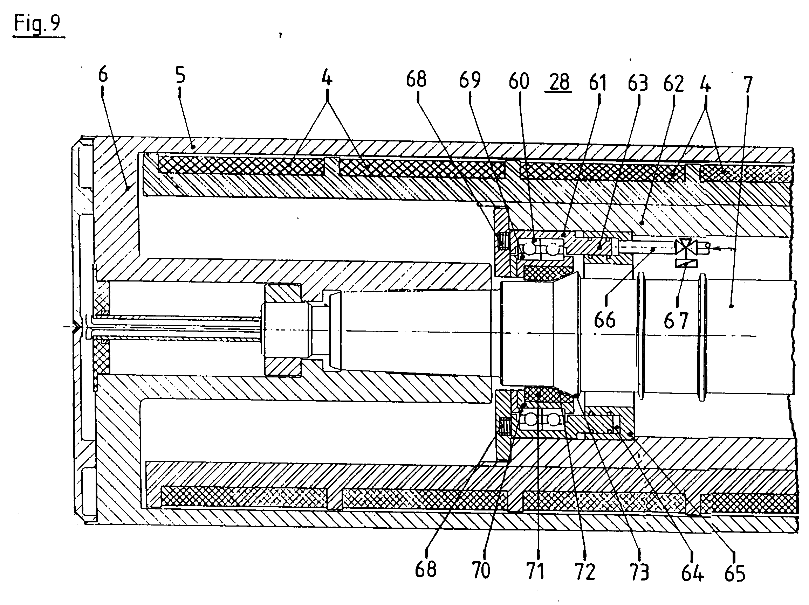

A back-up roller bearing 28 and its details will now be described with reference to Fig.9 representing a portion of Fig.8 at a larger scale. The outer race 60 of said roller bearing 28 is fastened to a housing 61 which is slideable in the axial direction with respect to hollow cylindrical support tube 62 carried by machine frame 1. A ring-shaped extension 63 of housing 61 extends like a piston into a ring-shaped space 64 of a piston housing 65 which is fixed to support tube 62. A connecting tube 66 connects space 64 to a source of pressurized air (not shown) via a three-way solenoid valve 67. Several compression springs 68 tend to push housing 61 to the right against the force generated by said air pressure within chamber or space 64. Inner race 69 of back-up bearing 28 is carried by an inner ring 70 to which a ring-shaped engagement piece 71 is fixed having a conical or tapered coupling surface 72. Shaft 7 has a corresponding tapered outer coupling surface 73 located opposite surface 72.

During normal operation, air under pressure moves piston 63 to the left against the spring force of springs 68. Therewith surfaces 72 and 73 are out of engagement and are separated by an air gap. In case of a failure within magnetic bearing 12 or its energizing circuit, the current through the energizing coil of solenoid valve 67 disappears so that this valve closes the supply of pressurized air into space 64 and instead bleeds-off the pressure within space 64 to the atmosphere. Therewith springs 68 quickly move housing 61 to the right and together with it move surface 72 into engagement with surface 73 via roller bearing 60,69 so that this back-up bearing now becomes effective and takes over the function of magnetic bearing 12. The current through solenoid valve 68 is preferably controlled by a self-checking fail-safe circuit of the energizing circuit for the magnetic bearing.

The above desribed back-up bearing in addition provides an effective protection for the magnetic bearing against damage during transport of the apparatus. During transport there is no supply of pressurized air into space 64 so that bearing 12 is firmly engaged with shaft 7 and all rotating masses are secured against radial movement caused by vibration or shock forces.

The invention can also be used for non-heated rolls and, in particular, for the spindle drive shaft of winding machines.

## Claims

1. A high speed roll for yarn treatment driven by an electric motor (8), comprising
a) a hollow cylindrical shell (5; 53a,53b) mechanically connected to the rotor (10) of said motor;
b) at least two bearings (12,13,14; 41,42;51,52) spaced apart from each other, having their stationary parts supported by the machine frame (1) of a yarn treating machine and having their rotating parts supporting said shell; **characterized in that**
c) at least one of said bearings is an electromagnetic bearing (12,13;41,42;51,52) having several magnetic pole pieces (23a to 23d) either facing the internal circumference of said shell (5;53a,53b) or facing the outer circumference of a driving shaft (7) carrying said shell (5), from two orthogonal directions and having energizing coils (24a to 24d) wound around said pole pieces;
d) a touch-free radial position sensor (25a to 25d) for said shell (5) or shaft (7) is provided near said magnetic bearing;
e) output means of said shaft position sensor is connected to input means of a position controller (26a,26b), whose output signals control the flow of electrical current through said energizing coils (24a to 24d); and
f) a back-up roller bearing (28) is provided close to said magnetic bearing as an auxiliary supporting means for said shell (5) or shaft (7), respectively.

2. The roll of claim 1, wherein said shell (5) is fixed at one of its ends by means of a radial hub (6) to said driving shaft (7) which extends through said shell (5) and is supported by two bearings (12,14) provided spaced apart along said shaft; characterized in that
a) a first one of said bearings is located inside or adjacent to said shell and is said electromagnetic bearing (12); and
b) the second bearing (14), located remote from said shell (5), is a roller bearing.

3. The roll of claim 1, wherein said shell (5) is fixed at one of its ends by means of a radial hub (6) to said driving shaft (7) which extends through said shell, characterized in that
a) said driving shaft is supported by two electromagnetic bearings (12, 13) provided spaced apart along said shaft;
b) touch-free shaft radial position sensor means (25a to 25d) is provided near each of said magnetic bearings (12, 13);
c) output means of each shaft position sensor is connected to input means of a shaft position controller (26a, 26b) for controlling the flow of electrical current through the energizing coils (24a to 24d) of the corresponding magnetic bearing (12, 13); and
d) an additional roller bearing (14) is provided for absorbing axial thrust of the shaft (7).

4. The roll of claim 1, characterized in that
a) said cylindrical shell (53a, 53b) is fixed to the rotor (10) of an electrical motor;
b) the stator (9) of said motor (9, 10) is provided inside the motor rotor (10) and is supported by a stationary shaft or tube (50) extending through said shell and through the motor;
c) said shaft or tube (50) is fixed to said machine frame (1) of a yarn treating machine;
d) said shell (53a, 53b) is supported by two electromagnetic bearings (51, 52) provided spaced apart along said shaft or tube (50) and fixed thereto; and
e) an additional roller bearing (14) is provided for absorbing axial thrust of said shell (53a,53b).

5. The roll of claim 4 wherein said shell (53a,53b) carries a number of exchangeably mounted bobbins of a yarn winding machine.

6. The roll of claim 4, wherein said shaft or tube (50) carries the magnetic core (3) and at least one energizing coil (4) of an induction heater for heating said shell (53a,53b).

7. The roll of claim 1 or 2, wherein a stationary induction heater (3, 4) is provided between said shell (5) and said shaft (7) and said shaft extends through said heater.

8. The roll of claim 1 or 2, wherein the magnetic bearing (12) is provided between said motor (8) and said shell (5).

9. The roll of claim 1 or 3, comprising a magnetic bearing (12,13) at each side of the motor (8).

10. The roll of claim 6, comprising a magnetic bearing (41, 42; 51, 52) at each side of the induction heater (3, 4).

11. The roll of one of the preceding claims, wherein the current controller comprises an electronic feedback controller (26a, 26b) followed by a chopper amplifier (27a, 27b).

12. The roll of one of the preceding claims, comprising a ring-shaped member (30) of electrically conducting material fixed to the free end of the shell (5), which member projects into a stationary, circular and inhomogeneous magnetic field for dampening radial vibrations of said free end of the shell.

13. The roll of one of the preceeding claims, characterized in that
a) said back-up roller bearing (28) comprises an outer race (60) and an inner race (69);
b) said outer race (60) is fixed to a ring-shaped housing (61) which is slideably guided in axial direction within said machine frame (1, 62);
c) said inner race (69) is fixed to a ring-shaped coupling member (71) comprising a ring-shaped coupling surface (72);
d) said shaft (7) has a corresponding ring-shaped counter coupling surface (73) facing the coupling surface (72) of said coupling member (71);
e) said housing (61) is spring biased (68) in the axial direction for engagement of said coupling surfaces (72,73);
f) means (63, 64, 65) are provided acting upon said housing (61) in opposite direction of said spring bias (68) for actively moving said housing (61) in the opposite axial direction for disengaging said coupling surfaces (72, 73).

14. The roll of claim 13, wherein said coupling surfaces (72, 73) are conically tapered in axial direction.

15. The roll of claim 13 or 14, wherein said disengaging means include a piston-like, ring-shaped extension (63) of said housing (61) extending tightly into a ring-shaped piston chamber (64) which is fixed to said machine frame (1, 62) and is connectable to a source of pressurized air.

16. The roll of claim 15, wherein a solenoid valve (67) is provided between said source of pressurized air and said ring-shaped piston chamber (64).

17. The roll of claim 13, 14, 15, or 16, wherein a plurality of compression springs (68) is located spaced apart around a front surface of said housing (61).

## Patentansprüche

1. Durch einen Elektromotor (8) angetriebene Hochgeschwindigkeitsrolle zur Gambehandlung mit
a) einem mechanisch mit dem Rotor (10) des Motors verbundenen hohlzylindrischen Rollenmantel (5;53a,53b);
b) wenigstens zwei im Abstand voneinander angeordneten Lagern (12,13,14;41,42;51,52) deren stationäre Teile vom Maschinengestell (1) einer Garnbehandlungsmaschine gehalten sind und deren rotierende Teile den Rollenmantel tragen; **dadurch gekennzeichnet**, daß
c) wenigstens eines der Lager ein elektromagnetisches Lager (12,13,14;41,42;51,52) mit mehreren Polstücken (23a bis 23d) ist, welche entweder dem Innenumfang des Rollenmantels (5;53a,53b) oder dem Außenumfang einer den Rollenmantel (5) tragenden Antriebswelle (7) aus zwei orthogonalen Richtungen zugewandt sind und um die Polstücke gewickelte Erregerwicklungen aufweisen;
d) ein berührungsfreier Radialpositionssensor (25a bis 25d) für den Rollenmantel (5) oder die Welle (7) in der Nähe des Magnetlagers vorgesehen ist;
e) Ausgangseinrichtungen des Radialpositionssensors an Eingangseinrichtungen eines Lagereglers (26a,26b) angeschlossen sind, dessen Ausgangssignale den elektrischen Stromfluß durch die Erregerwicklungen (24a bis 24d) steuern; und
f) ein Stütz-Wälzlager (28) in der Nähe des Magnetlagers angeordnet ist und als Hilfslager für den Rollenmantel (5) bzw. die Welle (7) dient.

2. Rolle nach Anspruch 1, bei der der Rollenmantel (5) an einem seiner Enden mit Hilfe einer radialen Nabe (6) an der Antriebswelle (7) befestigt ist, welche sich durch den Rollenmantel (5) hindurch erstreckt und von zwei längs der Welle im Abstand voneinander angeordneten Lagern (12,14) getragen wird; dadurch gekennzeichnet, daß
a) ein erstes der Lager innerhalb des Rollenmantels oder diesem benachbart angeordnet ist und das elektromagnetische Lager (12) bildet; und
b) das im Abstand vom Rollenmantel (5) angeordnete zweite Lager (14) ein Wälzlager ist.

3. Rolle nach Anspruch 1, bei der der Rollenmantel (5) an einem seiner Enden mittels einer radialen Nabe (6) an der sich durch den Rollenmantel hindurch erstreckenden Antriebswelle (7) befestigt ist, dadurch gekennzeichnet, daß
a) die Antriebswelle von zwei im Abstand voneinander längs der Welle vorgesehenen elektromagnetischen Lagern (12,13) getragen wird;
b) in der Nähe jedes der beiden Magnetlager (12,13) ein berührungsfreier Radialpositionssensor (25a bis 25d) für die Welle vorgesehen ist;
c) Ausgangseinrichtungen jedes Wellenpositionssensors an Eingangseinrichtungen eines Wellenlageregelers (26a,26b) angeschlossen sind, um den elektrischen Stromfluß durch die Erregerwicklungen (24a bis 24d) der entsprechenden Magnetlager (12,13) zu steuern; und
d) ein zusätzliches Wälzlager (14) zur Aufnahme von Axialkräften der Welle (7) vorgesehen ist.

4. Rolle nach Anspruch 1, dadurch gekennzeichnet, daß
a) der zylindrische Rollenmantel (53a,53b) am Rotor (10) eines Elektromotors befestigt ist;
b) der Stator (9) des Motors (9,10) sich innerhalb des Motorrotors (10) befindet und von einer stationären Welle oder einem stationären Rohr (50) getragen wird, welche(s) sich durch den Rollenmantel und durch den Motor erstreckt;
c) die Welle bzw. das Rohr (50) am Maschinengestell (1) einer Garnbehandlungsmaschine befestigt ist;
d) der Rollenmantel (53a,53b) von zwei elektromagnetischen Lagern (51,52) getragen wird, welche im Abstand voneinander längs der Welle bzw. des Rohrs (50) angeordnet und hieran befestigt sind; und
e) zur Aufnahme von Axialdruck der Rollenmantels (53a,53b) ein zusätzliches Wälzlager (14) vorgesehen ist.

5. Rolle nach Anspruch 4, bei welcher der Rollenmantel (53a,53b) mehrere auswechselbar befestigte Garnspulen einer Garnwickelmaschine trägt.

6. Rolle nach Anspruch 4, bei welcher die Welle bzw. das Rohr (50) den Magnetkern (3) und wenigstens eine Erregerwicklung (4) eines Induktionsheizers zum Aufheizen des Rollenmantels (53a,53b) trägt.

7. Rolle nach Anspruch 1 oder 2, bei der ein stationärer Induktionsheizer (3,4) zwischen dem Rollenmantel (5) und der Welle (7) angeordnet ist und sich die Welle durch den Heizer hindurch erstreckt.

8. Rolle nach Anspruch 1 oder 2, bei der das Magnetlager (12) zwischen dem Motor (8) und dem Rollenmantel (5) angeordnet ist.

9. Rolle nach Anspruch 1 oder 3 mit je einem Magnetlager (12,13) zu beiden Seiten des Motors (8).

10. Rolle nach Anspruch 6 mit je einem Magnetlager (41,42;51,51) zu beiden Seiten des Induktionsheizers (3,4).

11. Rolle nach einem der vorangehenden Ansprüche, wobei der Stromregler einen rückgekoppelten elektronischen Regler (26a,26b) aufweist, dem ein Zerhacker-Verstärker (27a,27b) nachgeschaltet ist.

12. Rolle nach einem der vorangehenden Ansprüche mit einem am freien Ende des Rollenmantels (5) angebrachten ringförmigen Teil (30) aus elektrisch leitendem Material, das zur Dämpfung von Radialschwingungen des freien Rollenmantelendes in ein stationäres, kreisförmiges und inhomogenes Magnetfeld hineinragt.

13. Rolle nach einem der vorangehenden Ansprüche, dadurch gekennzeichnet, daß
a) das Stütz-Wälzlager (28) einen äußeren Lagerring (60) und einen inneren Lagerring (69) aufweist;
b) der Außenring (60) an einem ringförmigen Gehäuse (61) befestigt ist, welches in Achsrichtung verschiebbar im Maschinengestell (1,62) geführt ist;
c) der Innenring (69) an einem ringförmigen Kupplungsglied (71) befestigt ist, welches eine ringförmige Kupplungsfläche (72) aufweist;
d) die Welle (7) eine entsprechende ringförmige Kupplungsgegenfläche (73) hat, welche der Kupplungsfläche (72) des Kupplungsgliedes (71) gegenübersteht;
e) das Gehäuse (61) zwecks Eingriff der Kupplungsflächen (72,73) in Achsrichtung federnd (68) vorgespannt ist;
f) Mittel (63,64,65) vorgesehen sind, welche in Gegenrichtung zur Federvorspannung (68) auf das Gehäuse (61) einwirken, um zum Lösen der Kupplungsflächen (72,73) das Gehäuse (61) in axialer Gegenrichtung zu verschieben.

14. Rolle nach Anspruch 13, bei der die Kupplungsflächen (72,73) in Achsrichtung konisch abgeschrägt sind.

15. Rolle nach Anspruch 13 oder 14, wobei die Entkupplungsmittel einen kolbenartigen, ringförmigen Ansatz (63) des Gehäuses (61) aufweisen, der abgedichtet in eine ringförmige Kolbenkammer (64) hineinragt, die am Maschinengestell (1,62) befestigt und an eine Druckluftquelle anschließbar ist.

16. Rolle nach Anspruch 15, wobei ein Magnetventil (67) zwischen der Druckluftquelle und der ringförmigen Kolbenkammer (64) angeordnet ist.

17. Rolle nach Anspruch 13, 14, 15, oder 16, wobei um eine Stirnfläche des Gehäuses (61) verteilt mehrere Druckfedern (68) im Abstand voneinander angeordnet sind.

## Revendications

1. Cylindre à grande vitesse pour le traitement de fil, entraîné par un moteur électrique (8), comprenant:
a) une coquille cylindrique creuse (5 ; 53a, 53b) connectée mécaniquement au rotor (10) dudit moteur;
b) au moins deux paliers (12, 13, 14 ; 41, 42 ; 51, 52) espacés l'un de l'autre, dont les parties stationnaires sont supportées par le cadre (1) de la machine d'une machine de traitement de fil et dont les parties rotatives supportent ladite coquille ;
caractérisé en ce que
c) au moins l'un desdits paliers est un palier électromagnétique (12, 13 ; 41, 42 ; 51, 52) ayant plusieurs pôles magnétiques (23a à 23d) soit faisant face à la circonférence interne de ladite coquille (5 ; 53a, 53b) soit faisant face à la circonférence externe d'un arbre d'entraînement (7) portant ladite coquille (5), depuis deux directions orthogonales et ayant des bobines d'excitation (24a à 24d) enroulées autour desdits pôles ;
d) un capteur de position radial non tactile (25a à 25d) pour ladite coquille (5) ou ledit arbre (7) est prévu près dudit palier magnétique ;
e) un moyen de sortie dudit capteur de position de l'arbre est connecté au moyen d'entrée d'un régulateur de position (26a, 26b), dont les signaux de sortie régulent la circulation du courant électrique à travers lesdites bobines d'excitation (24a à 24d) ; et
f) un palier à rouleau de secours (28) est prévu près dudit palier magnétique en tant que moyen de support auxiliaire pour ladite coquille (5) ou ledit arbre (7), respectivement.

2. Cylindre selon la revendication 1, dans lequel ladite coquille (5) est fixée à l'une de ses extrémités au moyen d'un moyeu radial (6) audit arbre d'entraînement (7) qui s'étend à travers ladite coquille (5) et est supporté par deux paliers (12, 14) espacés le long dudit arbre ; caractérisé en ce que
a) un premier desdits paliers est situé à l'intérieur ou à côté de ladite coquille et est ledit palier électromagnétique (12) ; et
b) le deuxième palier (14), situé éloigné de ladite coquille (5), est un palier à rouleau.

3. Cylindre selon la revendication 1, dans lequel ladite coquille (5) est fixée à l'une de ses extrémités au moyen d'un moyeu radial (6) audit arbre d'entraînement (7) qui s'étend à travers ladite coquille, caractérisé en ce que
a) ledit arbre d'entraînement est supporté par deux paliers électromagnétiques (12, 13) espacés le long dudit arbre ;
b) un moyen de capteur de position radial d'arbre non tactile (25a à 25d) est prévu près de chacun desdits paliers magnétiques (12 ,13) ;
c) un moyen de sortie de chaque capteur de position d'arbre est connecté à un moyen d'entrée d'un régulateur de position d'arbre (26a, 26b) pour réguler la circulation du courant électrique à travers les bobines d'excitation (24a à 24d) du palier magnétique correspondant (12, 13) ; et
d) un palier à rouleau supplémentaire (14) est prévu pour absorber la poussée axiale de l'arbre (7).

4. Cylindre selon la revendication 1, caractérisé en ce que
a) ladite coquille cylindrique (53a, 53b) est fixée au rotor (10) d'un moteur électrique ;
b) le stator (9) dudit moteur (9, 10) est prévu à l'intérieur du rotor (10) du moteur et est supporté par un arbre ou tube stationnaire (50) s'étendant à travers ladite coquille et à travers le moteur ;
c) ledit arbre ou tube (50) est fixé audit cadre (1) de la machine d'une machine de traitement de fil ;
d) ladite coquille (53a, 53b) est supportée par deux paliers électromagnétiques (51, 52) espacés le long dudit arbre ou tube (50) et fixés à celui-ci ; et
e) un palier à rouleau supplémentaire (14) est prévu pour absorber la poussée axiale de ladite coquille (53a, 53b).

5. Cylindre selon la revendication 4, dans lequel ladite coquille (53a, 53b) porte un certain nombre de bobines d'une machine d'enroulement de fil, montées de manière échangeable.

6. Cylindre selon la revendication 4, dans lequel ledit arbre ou tube (50) porte le noyau magnétique (3) et au moins une bobine d'excitation (4) d'un élément de chauffage à induction pour chauffer ladite coquille (53a, 53b).

7. Cylindre selon la revendication 1 ou 2, dans lequel un élément de chauffage à induction stationnaire (3, 4) est prévu entre ladite coquille (5) et ledit arbre (7) et ledit arbre s'étend à travers ledit élément de chauffage.

8. Cylindre selon la revendication 1 ou 2, dans lequel le palier magnétique (12) est prévu entre ledit moteur (8) et ladite coquille (5).

9. Cylindre selon la revendication 1 ou 3, comprenant un palier magnétique (12, 13) de chaque côté du moteur (8).

10. Cylindre selon la revendication 6, comprenant un palier magnétique (41, 42 ; 51, 52) de chaque côté de l'élément de chauffage par induction (3, 4).

11. Cylindre selon l'une des revendications précédentes, dans lequel le régulateur de courant comprend un système d'asservissement électronique (26a, 26b) suivi d'un amplificateur à découpage (27a, 27b).

12. Cylindre selon l'une des revendications précédentes, comprenant un organe en forme d'anneau (30) en matériau conducteur de l'électricité fixé à l'extrémité libre de la coquille (5), lequel organe fait saillie dans un champ magnétique stationnaire, circulaire et non homogène pour amortir les vibrations radiales de ladite extrémité libre de la coquille.

13. Cylindre selon l'une des revendications précédentes, caractérisé en ce que
a) ledit palier à rouleau de secours (28) comprend un chemin de roulement extérieur (60) et un chemin de roulement intérieur (69);
b) ledit chemin de roulement extérieur (60) est fixé à un logement en forme de bague (61) qui est guidé à coulissement en direction axiale à l'intérieur dudit cadre (1, 62) de la machine ;
c) ledit chemin de roulement intérieur (69) est fixé à un organe d'accouplement en forme de bague (71) comprenant une surface d'accouplement en forme de bague (72) ;
d) ledit arbre (7) a une surface d'accouplement (73) conjuguée en forme de bague correspondante en face de la surface d'accouplement (72) dudit organe d'accouplement (71) ;
e) ledit logement (61) est sollicité par ressort (68) dans la direction axiale en vue de l'engagement desdites surfaces d'accouplement (72, 73) ;
f) des moyens (63, 64, 65) sont prévus, qui agissent sur ledit logement (61) dans la direction opposée à ladite poussée du ressort (68) pour déplacer activement ledit logement (61) dans la direction axiale opposée pour désengager lesdites surfaces d'accouplement (72, 73).

14. Cylindre selon la revendication 13, dans lequel lesdites surfaces d'accouplement (72, 73) sont effilées en forme conique dans la direction axiale.

15. Cylindre selon la revendication 13 ou 14, dans lequel lesdits moyens de désengagement incluent un prolongement (63) dudit logement (61) en forme de bague et de type piston, s'étendant étroitement dans une chambre de piston (64) en forme de bague, qui est fixée audit cadre (1, 62) de la machine et peut être connectée à une source d'air sous pression.

16. Cylindre selon la revendication 15, dans lequel une électrovanne (67) est prévue entre ladite source d'air sous pression et ladite chambre de piston (64) en forme de bague.

17. Cylindre selon la revendication 13, 14, 15 ou 16, dans laquelle une pluralité de ressorts de compression (68) est espacée tout autour d'une surface avant dudit logement (61).
